# EUROPÄISCHE PATENTSCHRIFT

(11) **EP 3 292 319 B1**
(45) Veröffentlichungstag und Bekanntmachung des Hinweises auf die Patenterteilung: **12.06.2019**
(21) Anmeldenummer: 16723016.8
(22) Anmeldetag: 28.04.2016
(51) Int. Cl.: F16F 7/116

(54) **UNGEDÄMPFTER ADAPTIVER SCHWINGUNGSTILGER**
UNDAMPED ADAPTIVE VIBRATION DAMPER
AMORTISSEUR À MASSE ACCORDÉE ADAPTATIF NON AMORTI

(30) Priorität: 02.05.2015 EP 15001311
(43) Veröffentlichungstag der Anmeldung: 14.03.2018
(73) Patentinhaber: FM Energie GmbH & Co. KG, 64646 Heppenheim (DE)
(72) Erfinder: MITSCH, Franz, 64646 Heppenheim (DE)
(74) Vertreter: Benz, Jürgen
(86) Internationale Anmeldenummer: PCT/EP2016/000686
(87) Internationale Veröffentlichungsnummer: WO 2016/177454

(56) Entgegenhaltungen:
- DE-A1- 10 249 475
- DE-A1-102006 048 887
- DE-A1-102012 205 797
- DE-A1-102014 006 193
- US-A1- 2014 301 846

## Beschreibung

Die Erfindung betrifft einen Schwingungstilger bzw. - dämpfer, der über einen bestimmten Bereich variabel an die Störsequenzen des zu dämpfenden Bauteils bzw. der zu dämpfenden Maschine oder Anlage angepasst werden kann. Die Erfindung betrifft insbesondere einen Schwingungstilger, der selbst weitgehend ungedämpft ist, so dass hier größere Amplituden und somit größere Kräfte erzielt werden können. Der erfindungsgemäße Dämpfer ist insbesondere für Anlagen und Maschinen geeignet, welche häufige Drehzahländerungen unterworfen sind, so wie beispielsweise Windkraftanlagen, was sich vor allem in einer Reduzierung des Körperschalls bemerkbar macht.

Schwingungstilger zur Reduzierung von unerwünschten Schwingungen in Maschinen, Anlagen oder deren Bauteile sind generell im Stand der Technik bekannt. Hierfür wurden zahlreiche Lösungen vorgeschlagen. Die meisten dieser Lösungen sind mit einer gewünschten relativ starken passiven Dämpfung des angeregten Systems verbunden, so wie beispielsweise in der EP 1 008 747, der EP 1 327 726 oder der EP 2 816 177 beschrieben. Der wesentliche Funktionsteil dieser Systeme besteht dabei aus einem Elastomer, das selbst eine Dämpfung aufweist. Vorteil dieser System ist, dass die entsprechenden Tilger über einen breiten Frequenzbereich inklusive der vorkommenden Eigenfrequenzen eingesetzt werden können, so dass diese keine größeren Störungen der Anlage verursachen. Diese System arbeiten jedoch nur dann effizient, wenn die Drehzahlen der rotierenden Teile sich nicht oder nicht wesentlich ändern.

DE 102 49 475 A1 zeigt einen Schwingungstilger mit den Merkmalen des Oberbegriffs des Anspruchs 1.

Rotierende Systeme mit variierender Drehzahl neigen jedoch unter anderem zu vermehrtem bzw. verstärktem Körperschall, der insbesondere bei Windkraftanlagen unerwünscht ist.

Es bestand somit die Aufgabe einen Schwingungstilger zur Verfügung zu stellen, welcher insbesondere bei Schwingungssystemen mit sich verändernden Drehzahlen von rotierenden Bauteilen eine optimale Dämpfung im Bereich der Eigenfrequenzen des System, insbesondere des Körperschalls, bewirken können.

Die Aufgabe wird durch den hier beschriebenen und beanspruchten adaptiven Schwingungstilger mit den Merkmalen des Anspruchs 1 gelöst.

Der Tilger besteht im Wesentlichen aus einem stabförmigen Funktionselement (1) (20.8), beispielsweise ein Stab oder ein stabähnlichen Bauteil, welches an einem Ende mit der zu dämpfenden Konstruktion (Maschine, Anlage) vorteilhafterweise über eine Befestigungskonstruktion (13) (20.2) fest verbunden ist, und in der Lage ist, sich in seiner Längsachse reversibel zu verbiegen. An diesem Biege- oder Schwingstab, der auch rund oder trapezförmig sein kann oder auch zum freien Ende hin sich verjüngen kann, ist vorzugsweise im Bereich seines anderen gegenüberliegenden, freien Endes eine Trägerkonstruktion (6) für die Tilger- bzw. Schwingungsmasse (8) (20.1) angebracht, welche, wie die Tilgemasse selbst, rotationssymmetrisch in Bezug auf das Funktionselement (1) ist. Wird die Längsachse dieses Elementes als vertikal angesehen, so schwingt also die Tilgermasse bzw. seine Trägerkonstruktion hierzu horizontal.

Um die Frequenz dieser Konstruktion beeinflussen zu können muss die wirksame Länge des stabförmigen biegbaren Funktionselementes variabel sein. Eine einfache Möglichkeit wäre es nun, die Tilgermasse (8) (20.1) einfach an dem besagten stabförmigen Funktionselement über eine Spindel oder eine ähnliche Verschiebevorrichtung auf und ab zu fahren. Das Problem hierbei ist, dass bei höheren Frequenzen (> 30 Hz) eine Ankopplung der Masse an die Spindel mit großem Aufwand verbunden wäre (zum Beispiel lösbare Klemm- Schraub- oder Pressverbindung). Solche technischen Lösungen würden zumindest während der Dauer der Frequenzänderung keine optimale Ankopplung bewirken und könnten somit Störungen verursachen. Überdies müsste jedes Mal die zum Teil erhebliche Tilgermasse bewegt werden.

Der erfindungsgemäße Schwingungstilger weist demgegenüber nun mindestens eine in axialer Richtung verschiebbare Rollenvorrichtung (2) (20.4) auf, welche sich in einem Raum zwischen dem stabförmigen Funktionselement und der Trägerkonstruktion mit der Tilgermasse befindet, und diese Teile im Berührungsbereich der Rollen miteinander verbindet. Damit wird nun die schwingungstechnisch wirksame Länge des stabförmigen Funktionselementes entsprechend der eingestellten Position der Rollenvorrichtung verkürzt oder verlängert, was somit zu einer veränderten Frequenz des Schwingungssystems führt, ohne dass hierbei die Tilgermasse mitbewegt werden muss.

Die vorzugsweise in Bezug auf die Achse des stabförmigen Funktionselementes rotationssymmetrische Trägerkonstruktion weist nicht nur die Halterung für die Schwingungsmasse (8) (20.1) auf, sondern auch eine Verschiebevorrichtung (3) mit Laufflächen bzw. Schienen für den Einsatz besagter Rollenvorrichtung (2) (20.4). Die Verschiebevorrichtung umfasst beispielsweise Stäbe, Stangen oder Schienen, die parallel zur Achse des Biegestabes (1) angeordnet sind, welche durch eine obere und eine untere Abschlussplatte (5, 4) innerhalb der Trägerkonstruktion (6) zusammengehalten werden.

Die Stäbe, Stangen oder Schienen weisen Laufflächen (3.1) beispielsweise für die Laufrollen (2.1, 2.2, 2.3) der mindestens einen Rollenvorrichtung (2) auf.

Um in einer Ebene in alle Richtungen gleiche Steifigkeiten durch die Dämpfung zu erreichen sind mindestens drei Verbindungen zwischen Biegestab und Tilgermasse bzw. Gleitschienenvorrichtung (3) erforderlich. Dies wird erfindungsgemäß dadurch bewerkstelligt, dass das stabförmige Funktionselement drei plane Flächen aufweist, welche etwa einen Winkel von 120° (± 10°) zueinander einnehmen. Somit können drei Rolleneinheiten (2.1, 2.3) entlang der Flächen (1.1) und (3.1) bewegt werden und die Verbindung zwischen den Teilen (1) und (3) herstellen und somit die biegsame Länge des stabförmigen Funktionsteils (1) (20.8) des Tilgers bestimmen.

Es ist aber auch erfindungsgemäß möglich nur zwei der mindestens drei Verbindungen über die Rollenvorrichtung (2)(20.4) herzustellen und die dritte bzw. mindestens eine Verbindung durch ein durch die Verschiebevorrichtung (3) mitbewegtes Vorspannelement (20.7) (20.9) herzustellen. Mit Hilfe eines solchen Vorspannelementes kann die Schwingungsmasse bzw. die an ihr befestigte Trägerkonstruktion besser und fester an den Schwingstab (1) nach Einstellung der notwendigen bzw. gewünschten Eigenfrequenz des Schwingungssystems gepresst werden, was eine höhere Genauigkeit der Einstellung zur Folge hat. Als Vorspannelement können eine oder mehrere Druckfedern dienen, welche durch Spannmittel in ihrer Druckkraft variable eingestellt werden können.

In einer Ausführungsform umfasst der Schwingungstilger ein stabförmiges Funktionsteil mit drei plane Flächen, wie beschrieben und drei Rolleneinheiten, die auf den Flächen laufen und die Verbindung zwischen Tilgermasse und dem schwingungsfähigen Funktionselement (19 (20.8) herstellen. In einer erfindungsgemäßen Ausführungsform umfasst der erfindungsgemäße Schwingungstilger ein stabförmiges Funktionsteil mit drei plane Flächen, wie beschrieben, zwei Rolleneinheiten und ein mit den Rollen verschiebbares Vorspannelement, welches sich entlang der dritten Fläche bewegen und fixieren lässt.

Es ist auch denkbar, dass der so beschriebene Tilger mehr als drei Flächen auf dem Stab und auf der Geleitschienenkonstruktion aufweisen, solange gewährleistet wird, dass die angestrebte Dämpfung in allen Richtungen der Schwingungsebene der Tilgermasse wirksam ist. So könnten beispielsweise auch sechs Rolleneinheiten und gegebenenfalls ein, zwei oder drei Vorspannelemente mit den entsprechenden Laufflächen in Verbindung und Kontakt stehen.

Die Tilgermasse (8) (20.1) kann direkt an der Verschiebevorrichtung (3) oder auch an anderen Teilen der Trägerkonstruktion (6) befestigt sein. Die Tilgermasse selbst besteht im Wesentlichen aus einzelnen zentrischen Scheiben, die miteinander verbunden sind, wobei die Möglichkeit besteht, die Gesamtmasse durch Entfernen oder Hinzufügen solcher Massenscheiben entsprechend der gewünschten Dämpfung zu verändern.

Gegenstand der Erfindung ist somit ein an Störfrequenzen angepasster adaptiver Schwingungstilger mit den Merkmalen des Anspruchs 1, im Wesentlichen umfassend eine Schwingungsmasse (8) (20.1), eine Trägerstruktur (6), an welche die Schwingungsmasse (8) (20.1) befestigt ist, sowie ein schwingungsfähiges im Wesentlichen stabförmiges Funktionsfederelement (1) (20.8), beispielsweise ein schwingungsfähiger Stab, welches an einem Ende eine Befestigungsvorrichtung (13)(20.2) aufweist, mittels derer es mit einer Maschineneinheit (9) fest verbunden ist, die den besagten und zu dämpfenden Störungsfrequenzen ausgesetzt ist, wobei die Trägerstruktur (6) mindestens eine parallel zur Längsachse des stabförmigen Federelementes (1) (20.8) verlaufende und zu diesem ausgerichtete Verschiebevorrichtung (3) aufweist, und sich zwischen dem Funktionsfederelement (1) und der Verschiebevorrichtung (3) ein Zwischenraum befindet, in dem mindestens eine Rollenvorrichtung (2) (20.4) und gegebenenfalls mindestens ein Vorspannelement (20.7) (20.9) vorgesehen ist, die in axialer Richtung entlang der Verschiebevorrichtung vor und zurück bewegt und festgestellt werden kann und das Verbindungsglied zwischen dem Federelement (1) (20.8) und der Verschiebevorrichtung (3) darstellt, wobei die mindestens eine Rollenvorrichtung (2) (20.4) an einer bestimmten ausgewählten Position auf dem stabförmigen Federelement (1) (20.8) fixiert wird, wodurch die schwingungstechnisch wirksame Länge des Federelementes und damit die Frequenz des Schwingungssystems bei lokal unveränderter Schwingungsmasse (8) (20.1) variabel verändert und angepasst werden kann.

Gegenstand der Anmeldung ist im speziellen ein entsprechender Schwingungstilger im Wesentlichen umfassend einen schwingungsfähigen Biegestab (1) als spezielles Funktionsfederelement, eine mit diesem verbundene Schwingungsmasse (8) sowie einer an einem Ende des Biegestabs angebrachten Befestigungsvorrichtung (13) für eine Maschineneinheit, welche den Störfrequenzen ausgesetzt ist, wobei der Biegestab (1) vorzugsweise drei plane longitudinale Laufflächen (1.1) aufweist, welche im Winkel von 120° (± 10°) zueinander angeordnet sind und mit einer radial um seine Längsachse umlaufenden Trägerstruktur (6) fest verbunden ist, an welche die Schwingungsmasse (8) befestigt ist, wobei die Trägerstruktur eine parallel zur Längsachse des Biegestabes angeordnete Schienenvorrichtung (3) mit planen Laufflächen (3.1) als Verschiebevorrichtung aufweist, welche jeweils den drei Laufflächen (1.1) gegenüberliegen ,und sich zwischen Biegestab (1) und Schienenvorrichtung (3) ein Zwischenraum befindet, in dem eine Rollenvorrichtung (2, 2.4, 2.7) (20.4), für mindestens zwei der drei Laufflächen vorgesehen ist, die in axialer Richtung entlang besagter Laufflächen (1.1, 3.1) vor und zurück bewegt werden kann und welche das Verbindungsglied zwischen Biegestab (1) und Schienenvorrichtung (3) im Bereich besagter gegenüberliegenden Laufflächen ist, wodurch die schwingungstechnisch wirksame Länge des Biegestabes und damit die Frequenz des Schwingungssystems bei lokal unveränderter Schwingungsmasse (8) variabel verändert und angepasst werden kann.

Die Rollenvorrichtung (2) umfasst im Wesentlichen entsprechend den drei Richtungen der Schwingungsebene der Tilgermasse, bzw. entsprechend den drei gegenüberliegenden Flächenpaaren (1.1, 3.1) auf dem Biegestab bzw. der Schienenvorrichtung, drei Laufrolleneinheiten (2), die miteinander verbunden und entsprechend befestigt und geführt sind (2.4, 2.7), so dass sie als Einheit vor und zurück entlang der besagten Rollflächen auf dem mittigen Biegestab (1) und der peripheren umlaufenden Schienenvorrichtung (3) geführt, bzw. bewegt werden können.

Die Rollenvorrichtung (20.4) umfasst im Wesentlichen lediglich zwei Laufrolleneinheiten (2), die miteinander verbunden und entsprechend befestigt und geführt sind (2.4, 2.7) und auf zwei der drei Laufflächen entlanggleiten können, während an der dritten Lauffläche das Vorspannelement (20.7) (20.9) in Form von einer oder mehreren Druckfedern anliegt und mit der Verschiebevorrichtung (3) bewegt werden kann.

Jede Laufrolleneinheit umfasst neben entsprechenden Lagern ein äußeres Laufrollenpaar (2.1, 2.2) und eine mittlere Laufrolle (2.3), die erfindungsgemäß gegenläufig sind. Ist also die mittlere Rolle beispielsweise rechtsläufig, so müssen die beiden Rollen des äußeren Laufrollenpaares linksläufig sein, und umgekehrt. Dies bedeutet, dass mittlere Rolle und äußeres Laufrollenpaar nur jeweils mit der Lauffläche (1.1) des Biegestabes oder aber nur mit der Lauffläche (3.1) der Verschiebe- bzw. Schienenvorrichtung funktionell in Verbindung steht und an diesen abrollen, wobei, wenn die mittlere Laufrolle (2.3) beispielsweise mit der Lauffläche 1.1 des Biegestabes funktionell in Verbindung steht, die Rollen des äußeren Laufrollenpaares (2.1, 2.2) nur mit der Lauffläche (3.1) der Schienenvorrichtung in funktioneller Verbindung stehen darf, und umgekehrt.

Damit die Rollen mit einer Lauffläche nicht in Kontakt treten, ist es möglich, diese Fläche mit einem Freilaufspalt (2.3.3), bzw. mit einer entsprechend geformten Aussparung zu versehen. Ist die mittlere Rolle (2.3) im Durchmesser größer als die beiden äußeren Rollen, so sind an der äußeren Schienenvorrichtung (3) Aussparungen (3.2) für die gegendrehende Rolle vorhanden. Ist der Durchmesser der mittleren Rolle (2.3) gleich oder sogar kleiner als die äußeren Rollen (2.1, 2.2), so sollte die mittlere Rolle breiter sein als die Breite der Lauffläche 1.1.

Gegenstand der Anmeldung ist somit auch ein entsprechender Schwingungstilger, bei dem die Rollenvorrichtung (2) drei Laufrollenelemente (2.1, 2.2, 2.3) aufweist, die jeweils für die Verbindung der gegenüberliegenden Flächen des stabförmigen Funktionselementes bzw. Biegestabes und der Verschiebe-, bzw. Schienenvorrichtung vorgesehen sind, wobei jedes Element ein äußeres Laufrollenpaar (2.1, 2.2) und eine mittlere Laufrolle (2.3) umfasst, und die mittlere Laufrolle (2.3) eine unterschiedliche Laufrichtung besitzt als die beiden Rollen des äußeren Laufrollenpaars (2.1, 2.2), und die mittlere Laufrolle und das äußere Laufrollenpaar an unterschiedlichen Laufflächen (1.1) oder (3.1) abgerollt werden, und mit der jeweils anderen Lauffläche nicht in funktioneller Verbindung steht.

In einer Ausführungsform ist die Konstruktion der Rollenvorrichtung so gestaltet, dass die mittleren Laufrollen (2.3) der Laufrollenelemente entlang der Flächen (1.1) des Biegestabes (1), und die äußeren Laufrollenpaare (2.1) entlang der Flächen (3.1) der Schienenvorrichtung (3) abgerollt werden können. In einer weiteren Ausführungsform ist die Konstruktion der Rollenvorrichtung so gestaltet, dass die mittleren Laufrollen (2.3) der Doppellaufrollenelemente entlang der Flächen (3.1) der Schienenvorrichtung (3) und die äußeren Laufrollenpaare (2.1) entlang der Flächen (3.1) des Biegestabes (1) abgerollt werden können. In einer anderen Ausführungsform weisen die Flächen (1.1, 3.1) in den Bereichen auf dem Biegestab und der Schienenvorrichtung eine Freiluftspalte (2.3.3) auf, deren Lauffläche nicht von den jeweiligen Rollen (2.1, 2.2, 2.3) zum Abrollen verwendet wird. Somit wird verhindert, dass hier die Rollen nicht mit der betreffenden Fläche in Kontakt treten können. Dadurch kann ein reibungsfreier und optimaler Bewegungsablauf sichergestellt werden.

Zur technischen Realisierung , besitzt die Laufrolleneinheit eine Welle (2.5), auf welcher auf beiden Seiten die Laufrollen angebracht sind, so dass sich die Laufrollen (2.1, 2.2) gegenüber der mittleren Laufrolle 2.3 drehen können, was für den Abroll- Vorgang von entscheidender Bedeutung ist. Alternativ können auch die äußeren Rollen mit je einem Wälzlager versehen sein. Die mittlere Rolle könnte dann ohne Wälzlager starr mit der Welle verbunden sein. Wichtig ist bei der erfindungsgemäßen Konstruktion jedoch, dass sich die äußeren Rollen in umgekehrter Richtung wie die mittlere Rolle drehen können, damit der Abrollvorgang an den besagten Flächen (1.1, 3.1) ohne Reibung stattfinden kann.

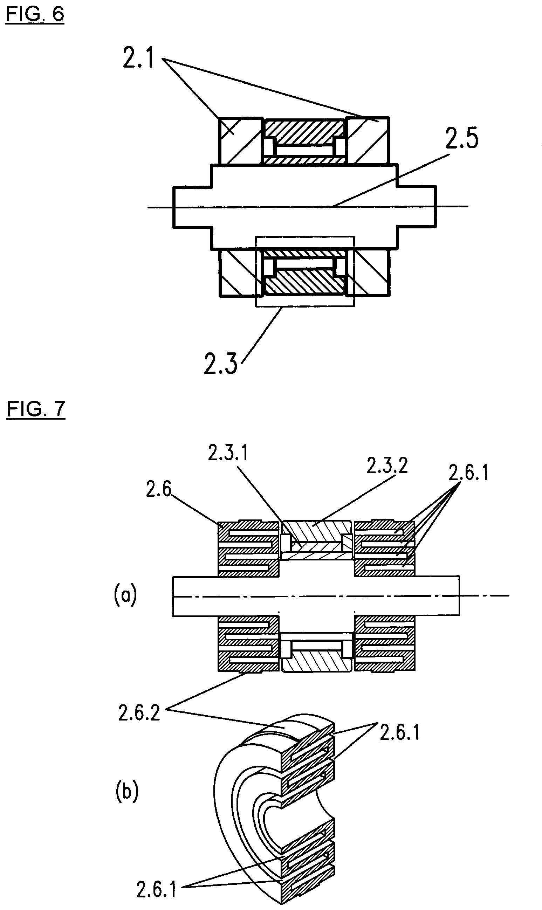

Die Rollen selbst können starr bzw. unelastisch sein, jedoch auch weich und elastisch. Eine elastische Ausführung hat den Vorteil, dass Fertigungs-und Montage-Toleranzen ausgeglichen werden können, während starre unelastische Rollen dem System Zwänge auferlegen würde, was auf Kosten der Haltbarkeit und / oder einer optimalen Dämpfung, bzw. Körperschallentkopplung gehen würde. Dabei können sowohl die mittleren Rollen (2.3) als auch die äußeren Rollen (2.2) elastisch sein. Die Elastizität kann durch verschiedene Maßnahmen erreicht werden. So können die Rollen ganz oder teilweise aus Elastomermaterial bestehen. Die Rollen können weiterhin mit elastischem Material beschichtet sein. In einer besonderen Ausführungsform der Erfindung stellen die Rollen metallische Hohlkörper (2.2) dar, die allein durch das elastische Blech des Umfangs ausreichend weich sind. In einer weiteren Ausführungsform der Erfindung besteht eine Rolle aus einem mäanderförmig angeordneten Blech (Abb. 7), welches wie eine Feder wirkt (Labyrinth-Rolle).

Die axiale Verschiebung der Rolleneinheit (2)(20.4) mittels der Verschiebevorrichtung (3) entlang der Achse des Biegestabes kann auf verschiedene an sich bekannte Arten erfolgen. Dies kann manuell aber auch automatisch mittels eines Axialantriebes (12), insbesondere eines axialen Linearantriebes, beispielsweise eines Spindelmotors (12.1) erfolgen. Der Axialantrieb kann verschiedenartig innerhalb des Tilgers aber auch außerhalb des Tilgers platziert sein. In eine Ausführungsform der Erfindung ist der Antrieb im Bereich des freien Endes der Biegestange (1) angebracht. Er kann aber auch unterhalb des Biegepunktes des Stabes (1), beispielsweise innerhalb oder unterhalb einer Befestigungsvorrichtung Platz finden. In all diesen Fällen ist die verschiebbare Rollenvorrichtung vorzugsweise über entsprechende Führungsstangen (12.4) mit dem Antrieb verbunden, welche der Motor axial bewegt, und somit auch die Rollenvorrichtung.

Generell kann der Schwingungstilger in weiteren folgenden Ausführungsformen vorliegen:
- die Rollenvorrichtung (2)(20.4) bzw. die Doppellaufrollenelemente (2.1, 2.2, 2.3) weisen elastische Laufrollen auf, welche elastisch sind;
- die äußeren Laufrollenpaare (2.1, 2.2) der Doppellaufrollenelemente (2.1, 2.2, 2.3) sind elastisch;
- die Laufrollen sind aus Metall gefertigt, sind jedoch hohl oder mit elastischem Material überzogen, oder weisen eine Feder- oder Mäanderstruktur (2.6.1) auf;
- die Laufrollen der Rollenvorrichtung (2)(20.4) besitzen eine hervorgehobene Lauffläche (2.6.2);
- die Rolleneinheiten der Rollenvorrichtung (2) (20.4) können miteinander über Verbindungselemente bzw. Axialführungen (2.4) miteinander verbunden sein, wodurch eine gleichmäßige Steifigkeit des Tilgers in der X-Y-Ebene sichergestellt ist. Durch Weglassen der besagten Elemente und Einzelführung und -Steuerung der Rolleneinheiten können unterschiedliche Steifigkeiten in X-, Y-Richtung erreicht werden, wodurch variable unterschiedliche Frequenzen in X-, Y-Richtung einstellbar sind;
- die Befestigungsvorrichtung (13), welche in einer einfachen Ausführungsform aus einer oberen und einer unteren Platte (5, 4) mit Verbindungsschrauben bestehen kann, weist Elemente auf, mit welcher auf eine vorhandene unregelmäßige Steifigkeit der zu beruhigenden Maschine Einfluss genommen werden kann, wobei diese Elemente am Umfang der Befestigungsvorrichtung angeordnete Federelemente oder elastische Scheiben (13.7) sein können, welche einzeln herausgenommen oder eingeschoben werden.;
- der Schwingungstilger weist im Bereich der Rollenvorrichtung oder im äußeren Bereich der Trägerstruktur vorzugsweise elastische Lenkerelemente, bzw. Lenkerfedern (20.3) auf, die den Tilger gegen seitliches Kippen oder Ausweichen schützen.

Die entstehende Eigenfrequenz des mit einem Tilger ausgestatten zu dämpfenden Systems ist erfindungsgemäß eine Funktion von der axialen Verschiebung der Rollenvorrichtung (2)(20.4). Zur Aufnahme oder Ermittlung der Frequenz-Kennlinie wird die Länge des Funktionselementes (1) (20.8) schrittweise abgefahren und die Kennlinie der Eigenfrequenz über der Stelllänge ermittelt. Somit wird die jeweilige Stellung der Rollenvorrichtung exakt an die Störfrequenz angepasst. Die Kennlinie kann anschließend verwendet werden, um die Stellmotor-Steuerung des Antriebes in Abhängigkeit von der Frequenz einzustellen. Der Antrieb hat nun die Aufgabe, exakt und wiederholgenau die richtige Position anzufahren, welche eine Eigenfrequenz des Systems ergibt, die der zu tilgenden Frequenz, abhängig von der Maschinendrehzahl, entgegenwirkt. Das kann ein Schrittmotor sein, der die einzelnen Schritte zählt (pro Umdrehung so viele Schritte, wie sie für eine ausreichende Auflösung erforderlich sind). Da ein solcher Schrittmotor, wenn auch nur in seltenen Fällen, seine jeweilige Stellung "vergessen" kann, fährt dieser in gewissen Zeitabständen, zum Beispiel einmal pro Stunde, in eine Endlage und kalibriert sich neu. Es kann aber auch ein Linearmotor verwendet werden, der über einen Lineal- Maßstab, welcher exakt die jeweilige Stellung der Rollen misst, angesteuert wird. Auch die Verwendung optischer Messmethoden, inklusive Laser ist denkbar. Die Steuereinheiten werden so programmiert, dass sie die Laufrollen in Abhängigkeit von der Störfrequenz auf die richtige Höhe fahren.

Je nach Länge des Funktionselementes (1) (20.8) des Tilgers können auf verschiedenen Störfrequenzen, die in der Maschine oder Anlage auftreten, beispielsweise durch Drehzahländerungen, Einfluss genommen werden. Bei einer aktiven Biegestablänge von beispielsweise 150 bis 300mm können Frequenzen zwischen 50 Hz und 250 Hz, vorzugsweise zwischen 100 Hz und 200 Hz gedämpft werden. Für tiefere Frequenzen kann die Biegestange verlängert werden, was jedoch einen größeren Bauraum erforderlich macht. Ferner ist es möglich durch Einbau zusätzlicher Federn den Frequenzbereich zu kleineren Frequenzen hin zu verschieben. Auch durch Verwendung von weichen Laufrollen, wie oben beschrieben, können niedrigere Frequenzen beeinflusst werden. Eine weitere Frequenzverschiebung und Beeinflussung der Schwingungscharakteristika ist durch die Höhenlage des Massenschwerpunktes des Tilgers im Bereich des axialen Bewegungsweges des Doppellaufrollenpaketes und auch außerhalb dieses Bereiches möglich. Der Massenschwerpunkt kann ferner durch unterschiedliche Ausdehnung oder auch unterschiedliche Dichte des verwendeten Werkstoffes der einzelnen Massekörper (8) in der Schwingebene erreicht werden.

Es hat sich gezeigt, dass der erfindungsgemäße adaptive Schwingungstilger insbesondere im Zusammenspiel mit dämpfenden Tilgern besonders vorteilhaft eingesetzt werden kann.

Der erfindungsgemäße Schwingungsdämpfer ist, wie beschrieben, somit geeignet zur Reduzierung oder Beseitigung von Störfrequenzen in einer Maschine oder Anlage oder Teilen einer Maschine oder Anlage, insbesondere aber zur Beruhigung von Störschwingungen und Körperschall im Bereich der Rotornabe, der Rotorblätter, des Getriebes, des Generators oder des Antriebsstranges einer Windkraftanlage.

In folgenden werden die im Text und in den Abbildungen verwendeten Bezugsgrößen sowie die Abbildungen selbst näher beschrieben und erläutert.

Bezeichnungen der verwendeten Bezugsgrößen:
- **1**.: Dreikant Biegestab
- **1**.1.: Lauffläche
- **1**.2.: Befestigung unten
- **1**.3.: Befestigung oben

- 2.: Rollenvorrichtung
- 2.1.: Äußere Laufrolle
- 2.2.: Äußere Laufrolle einfach elastisch
- 2.3.: Mittlere Rolle
- 2.3.1: Wälzlager
- 2.3.2: Außenring
- 2.3.3: Freilaufspalt
- 2.4.: Axialführung / Verbindungselement zwischen Rolleneinheiten
- 2.5.: Welle
- 2.6.: Labyrinth-Rolle
- 2.6.1: umlaufende Rille
- 2.6.2: Lauffläche
- 2.7.: Führung der Doppellaufrolle

- 3.: Laufflächen- / Schienenvorrichtung
- 3.1.: Lauffläche für Rollen
- 3.2.: Aussparung für gegendrehende Rolle
- 4.: Verbindungs-Platte unten
- 5.: Verbindungs-Platte oben
- 6.: Trägerkonstruktion
- 7.: Tilgermasse / Schwingungsmasse
- 8.: zu dämpfende Maschineneinheit

- 9.: Axialantrieb
- 9.1.: Motor
- 9.2.: Spindel
- 9.3.: Spindel Mutter
- 9.4.: Führungsstange
- 10.: Befestigung
- 13.1: Befestigungsplatte unten
- 13.2: Befestigungsplatte oben
- 13.3: Befestigungsschraube
- 13.4: Verbindungsring
- 13.5: Verbindungsschraube
- 13.6: Zugangsbohrung zu den Verbindungsschrauben
- 13.7: Einschiebe-Scheiben zur Regulierung von unterschiedlichen Steifigkeiten

- 20.1: Masse
- 20.2: Befestigungselement
- 20.3: Lenkerfedern rund
- 20.4: (Doppel-)Rolleneinheit
- 20.5: Verbindung der Rolleneinheit
- 20.6: Laufschienen
- 20.7: Vorspannfedern
- 20.8: Funktionsfederelement mit federseitiger Lauffläche für Rollen
- 20.9: Vorspannelement
- 20.10: masseseitige Lauffläche für Rollen

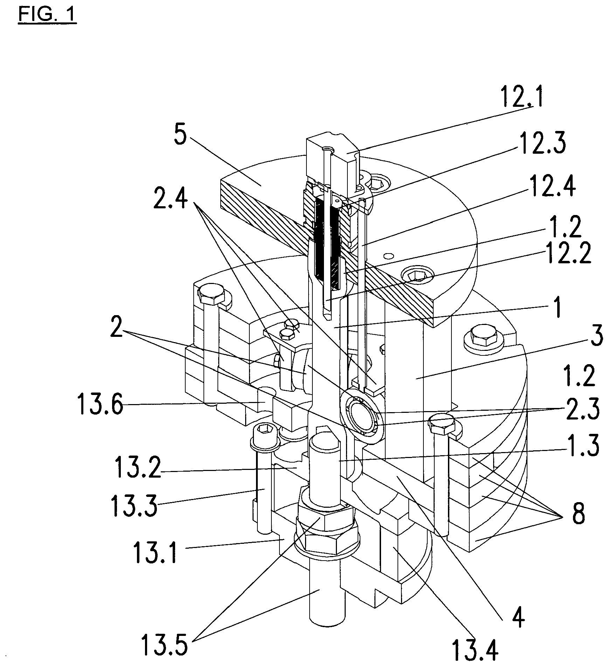

Abb. 1 zeigt eine dreidimensionale Sicht eines typischen adaptiven Schwingungstilgers. Eine Biegestab (1) ist über eine Befestigungsmuffe (13) mit dem nicht gezeigten Maschinenteil verbunden. Im oberen Bereich des Biegestabes ist die Trägerkonstruktion für die Masse (8), die hier in Form von Massenscheiben dargestellt ist, und die Schienenvorrichtung (3) für die Rollenvorrichtung (2) befestigt. Die Trägerkonstruktion wird in dem gezeigten Fall durch die beiden Abschlussplatten (4, 5) und den Schienenelementen (3) (nur eine gezeigt), welche die Form von Kantstangen besitzen, gebildet. Die Masse (8), bzw. die Massenscheiben (8) sind auf die untere Abschlussplatte (4) geschraubt, bzw. gesteckt. Sie können aber auch an der oberen Abschlussplatte (5) oder an den besagten Schienenelementen befestigt sein. Die Rollenvorrichtung wird über einen Führungsschiene (12.4) hoch und runter bewegt und zwar mittels eines Spindelmotors (12), der im oberen Bereich bzw. am freien Ende des Stabes (1) untergebracht ist. Genauso gut könnte er aber auch in der gezeigten Befestigungsmuffe (13) Platz finden. Die Bewegung des Laufrollenpaktes aus drei Laufrollenelementen (2) wird so erzeugt, dass der Motor über eine zentrale Spindel (12.2) welche in der Spindelmutter (12.3) geführt wird axial bewegt. Die am Motorflansch befestigten Führungsstangen (12.4) bewegen sich damit auch in der zum Dreikantstab (1) parallelen Richtung und verschieben damit das an den Führungsstangen befestigte Doppellaufrollenpaket (2).

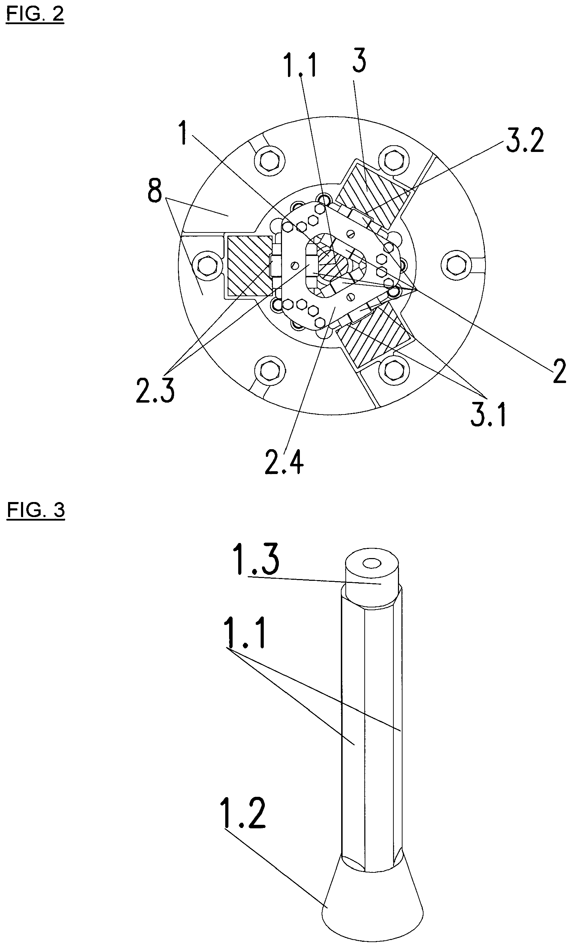

Abb. 2 zeigt den Schwingungstilger von oben in einer Draufsicht, wobei die Abschlussplatte (5) und die Masse (8) weggelassen wurde. Die Schienenvorrichtung umfasst hier drei senkrechte zum Biegestab (1) parallel verlaufende Gleitkörper (3), die im 120° Winkel zueinander stehen. Entsprechend ist die Rollenvorrichtung (2) mit drei Rolleneinheiten (2.1, 2.3) konstruiert und ausgerichtet, so dass die Rollen mit den Schienen (3) über die Außenrollen (2.1) in Kontakt stehen, während die die Flächen (1.2) des Biegestabes (1) über die jeweils mittleren Rollen (2.3) in Kontakt stehen. Letztere werden durch einen Freilaufspalt von den Schienen (3) ferngehalten.
Abb. 3 zeigt den Biegestab mit seinen im 120° Winkel zueinander stehenden Flächen (1.1), sowie einen oberen und unteren Befestigungspunkt (1.2, 1.3). Der obere Befestigungspunkt ist für die Anbringung der Trägerstruktur bzw. der Schwingungsmasse vorgesehen, während am unteren Befestigungspunkt das zu dämpfende Maschinenteil entweder direkt oder vorzugsweise über eine Befestigungsvorrichtung (13) (20.2) angebracht ist. Der Biegestab kann sich auch nach oben verjüngen, so dass dadurch weiter Einfluss auf die Tilgerfrequenz genommen werden kann.

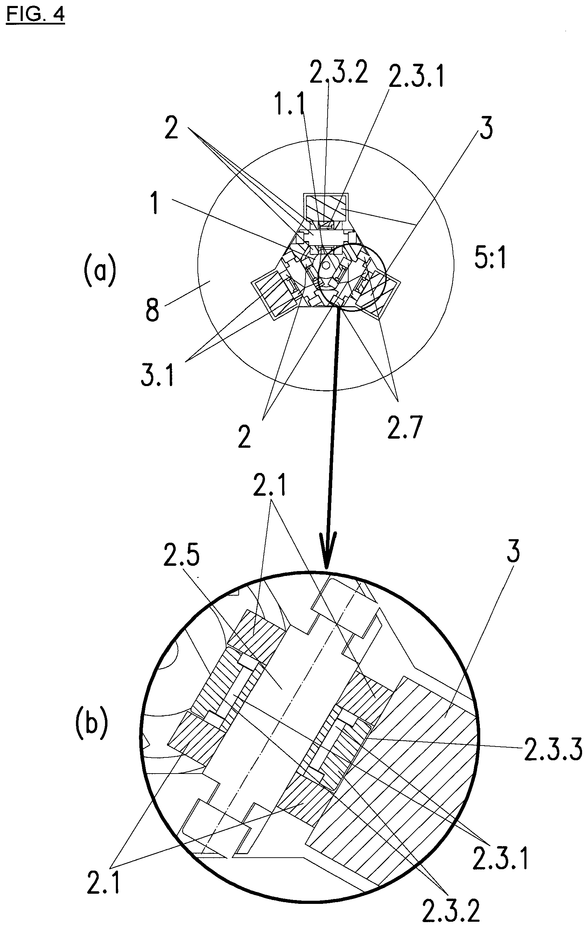

Abb. 4 zeigt eine weitere Darstellung (gesamt-oben, Detail-unterer Ausschnitt), wie die Laufrolleneinheiten (2) mit den Bauelementen (1) und (3) in Kontakt stehen.

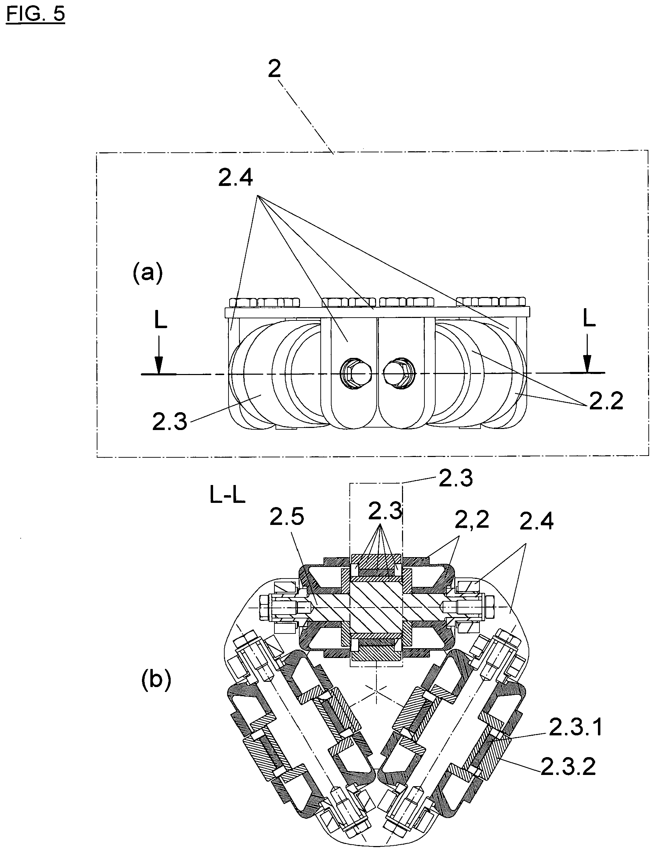

Abb. 5 zeigt im oberen Bild eine dreidimensionale Seitenansicht der Rollenvorrichtung (2), und im unteren Bild einen Schnitt durch die Schnittebene L-L. Die drei Rolleneinheiten weisen jeweils äußere flexible/elastische Hohlräder auf, die in diesem Fall an den Laufflächen (1.1) des mittigen Dreikant-Biegestabes abrollen, währen die jeweils mittige starre Rolle (2.3) mit diesen Flächen nicht in Kontakt steht sondern vielmehr mit den Flächen der Schienenvorrichtung (3) (hier nicht gezeigt).
Abb. 6 und 7 zeigen spezielle Ausführungsformen der Rollen teilweise inklusive Welle (2.5).

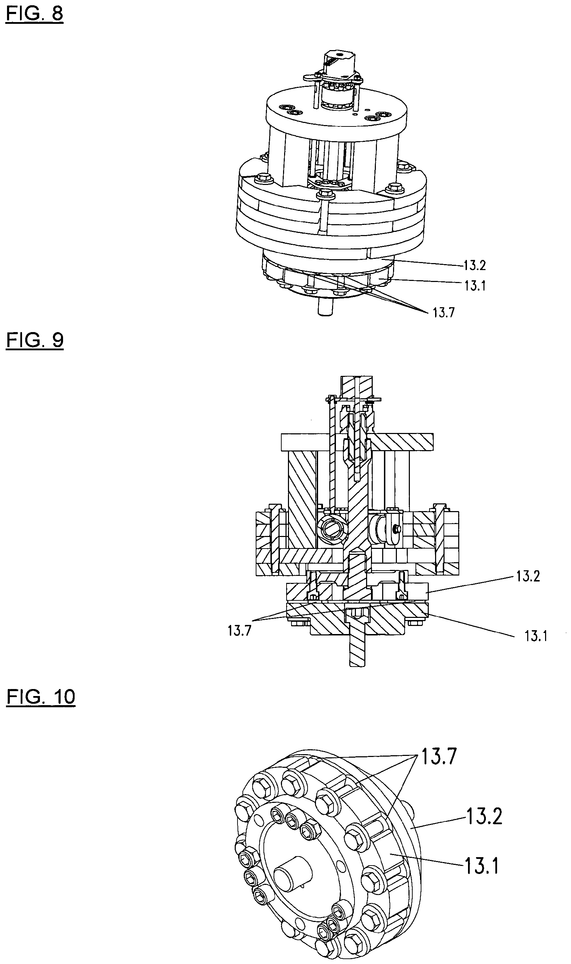

Abb. 8 und 9 zeigen den erfindungsgemäßen Tilger in Montage mit der Befestigungsvorrichtung 13.
Abb. 10 zeigt die Unterseite einer Ausführungsform der Befestigungsvorrichtung mit umlaufenden Unterlegscheiben zur Anpassung an auftretende lokale unregelmäßige Steifigkeiten des Systems.

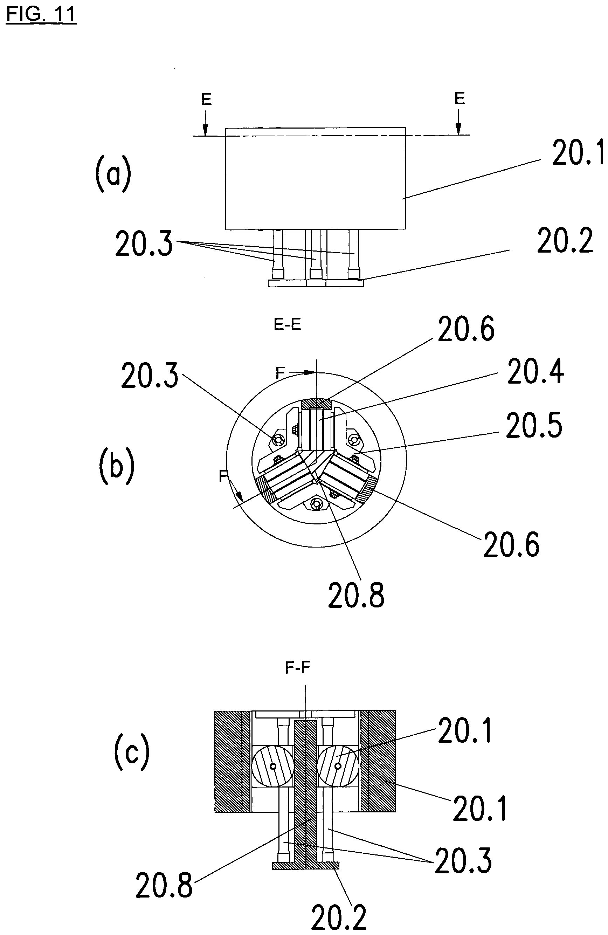

Abb. 11 (a)-(c) zeigt den Tilger mit drei Rollenvorrichtungen, welche entlang der drei Laufflächen des Biegestabes (20.8) bewegt werden können sowie drei in diesem inneren Bereich des Tilgers positionierten Lenkerfedern (20.3), welche ein seitliches Wegkippen der Trägerstruktur/Tilgermasse verhindern.

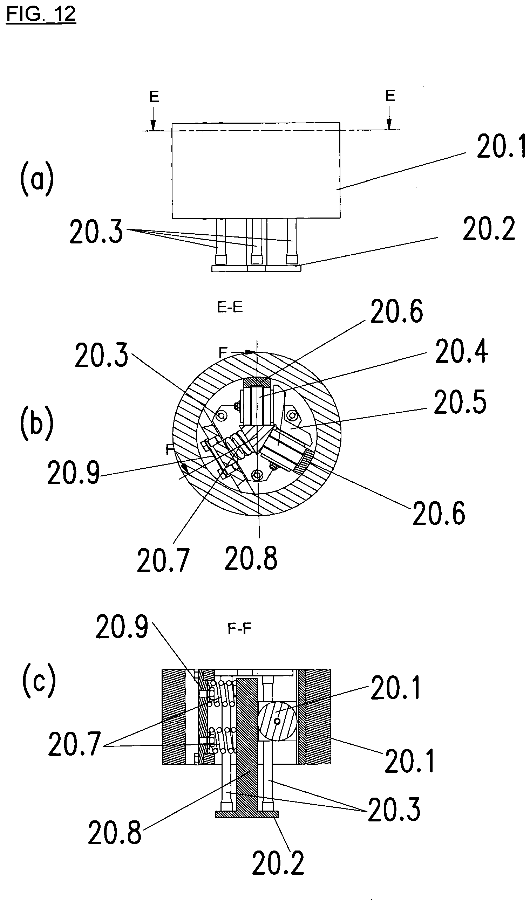

Abb. 12 (a)-(c) zeigt einen erfindungsgemäßen Tilger gemäß Abb.11, bei dem eine der drei Rollenvorrichtungen durch eine Vorspannelement mit zwei Druckfedern (20.7) (20.9) ersetzt ist.

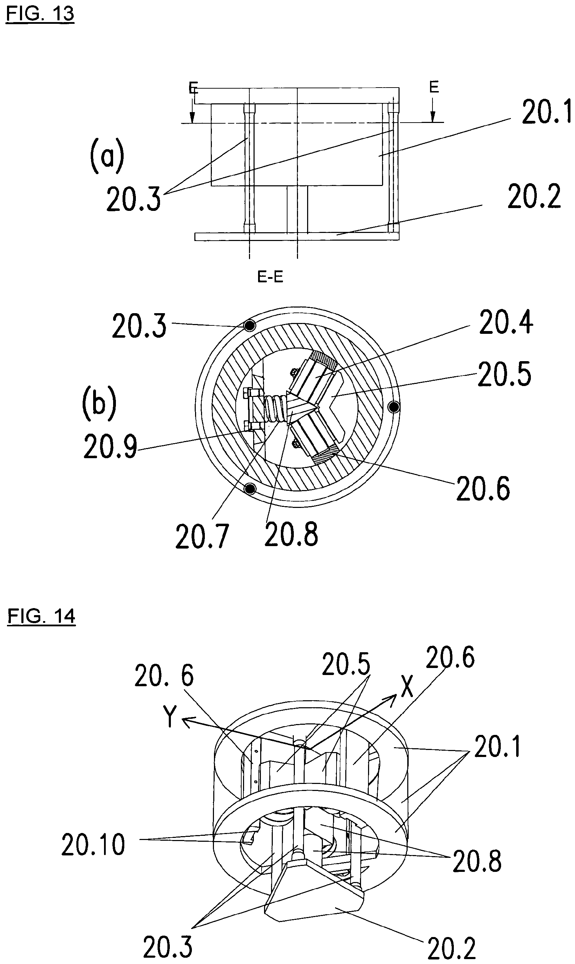

Abb. 13 (a)-(c) zeigt eine Ausführung des erfindungsgemäßen Tilgers gemäß Abb. 12 jedoch mit Lenkerelementen (20.3), welche im radial äußeren Bereich der Trägerstruktur bzw. der Tilgermasse angeordnet sind.
Abb. 14 zeigt den Tilger gemäß Abb. 11 in einer dreidimensionalen Darstellung, aus der die möglichen Schwingungsrichtungen X und Y hervorgehen.

## Patentansprüche

1. An Störfrequenzen angepasster adaptiver Schwingungstilger im Wesentlichen umfassend eine Schwingungsmasse (8) (20.1), eine Trägerstruktur (6), an welche die Schwingungsmasse (8) (20.1) befestigt ist, sowie ein schwingungsfähiges im Wesentlichen stabförmiges Funktionsfederelement (1) (20.8), welches an einem Ende eine Befestigungsvorrichtung (13)(20.2) aufweist, mittels derer es mit einer Maschineneinheit (9) fest verbunden ist, die den besagten und zu dämpfenden Störungsfrequenzen ausgesetzt ist, wobei die Trägerstruktur (6) mindestens eine parallel zur Längsachse des stabförmigen Funktionsfederelementes (1) (20.8) verlaufende und zu diesem ausgerichtete Verschiebevorrichtung (3) aufweist, und sich zwischen dem Funktionsfederelement (1) (20.8) und der Verschiebevorrichtung (3) ein Zwischenraum befindet, in dem mindestens eine Rollenvorrichtung (2) (20.4) vorgesehen ist, die in axialer Richtung entlang der Verschiebevorrichtung vor und zurück bewegt und festgestellt werden kann und das Verbindungsglied zwischen dem stabförmigen Funktionsfederelement (1) (20.8) und der Verschiebevorrichtung (3) darstellt, wobei durch Fixierung der mindestens einen Rollenvorrichtung (2) (20.4) an einer bestimmten ausgewählten Position auf dem stabförmigen Funktionsfederelement (1) (20.8) die schwingungstechnisch wirksame Länge des besagten Funktionsfederelementes und damit die Frequenz des Schwingungssystems bei lokal unveränderter Schwingungsmasse (8) (20.1) variabel verändert und angepasst werden kann; **dadurch gekennzeichnet, dass** zusätzlich zu besagter mindestens einer Rollenvorrichtung (2) (20.4) mindestens ein Vorspannelement (20.7) (20.9) vorgesehen ist, welches zusammen mit der Rollenvorrichtung wie dieses in axialer Richtung entlang der Verschiebevorrichtung (3) vor und zurück bewegt und festgestellt werden kann.

2. Schwingungstilger nach Anspruch 1, **dadurch gekennzeichnet, dass** der Tilger zwei Rollenvorrichtungen (2) (20.4) und mindestens ein Vorspannelement (20.7) (20.9) aufweist, wobei die besagten Elemente gleichmäßig um das Funktionsfederelement (1) (20.8) angeordnet sind

3. Schwingungstilger nach Anspruch 2, **dadurch gekennzeichnet, dass** das Vorspannelement mindestens eine Druckfeder (20.7) aufweist.

4. Schwingungstilger nach einem der Ansprüche 1 - 3, **dadurch gekennzeichnet, dass** er Lenkfederelemente (20.3) aufweist, welche im unmittelbaren Bereich der Rollenvorrichtung (2) (20.4) oder im Bereich der Trägerstruktur (6) oder der Schwingungsmasse (8) (20.1) angeordnet sind, und bei Kraftausübung auf das Funktionsfederelement (1) (20.8) die Schwingungsmasse (8) (20.1) am Verdrehen hindern, ohne die Federsteifigkeit des Gesamtsystems wesentlich zu beeinflussen

5. Schwingungstilger nach einem der Ansprüche 1 - 4, **dadurch gekennzeichnet, dass** das Funktionsfederelement (1) (20.8), ein Biegestab mit drei planen longitudinalen Laufflächen (1.1) ist, welche im Winkel von 120° (± 10°) zueinander angeordnet sind.

6. Schwingungstilger nach Anspruch 5, **dadurch gekennzeichnet, dass** die Verschiebevorrichtung (3) eine Schienenvorrichtung ist, welche plane Laufflächen (3.1) aufweist, die den drei Laufflächen (1.1) des Biegestabes (1) gegenüberliegen, wobei die besagten Laufflächen zur Führung der besagten Rollenvorrichtung(en) vorgesehen ist.

7. Schwingungstilger nach Anspruch 6, **dadurch gekennzeichnet, dass** die Rollenvorrichtung (2) (20.4) zwei oder drei Doppellaufrollenelemente (2.1, 2.2, 2.3) aufweist, die jeweils für die Verbindung der gegenüberliegenden Flächen des Biegestabes und der Schienenvorrichtung vorgesehen sind, wobei jedes Element ein äußeres Laufrollenpaar (2.1, 2.2) und eine mittlere Laufrolle (2.3) umfasst, und die mittlere Laufrolle (2.3) eine unterschiedliche Laufrichtung besitzt als die beiden Rollen des äußeren Laufrollenpaars (2.1, 2.2), und die mittlere Laufrolle und das äußere Laufrollenpaar an unterschiedlichen Laufflächen (1.1) oder (3.1) abgerollt werden, und mit der jeweils anderen Lauffläche nicht in funktioneller Verbindung steht.

8. Schwingungstilger nach Anspruch 7, **dadurch gekennzeichnet, dass** die Flächen (1.1, 3.1) Freiluftspalte (2.3.3) in den Bereichen auf dem Biegestab und Schienenvorrichtung aufweisen, deren Lauffläche nicht von den jeweiligen Rollen (2.1, 2.2, 2.3) zum Abrollen verwendet wird.

9. Schwingungstilger nach Anspruch 7 oder 8, **dadurch gekennzeichnet, dass** die zwei oder drei Doppellaufrollenelemente (2.1, 2.2, 2.3) über Halterung oder Führungen (2.7, 2.4) zusammengeführt sind.

10. Schwingungstilger nach einem der Ansprüche 7 - 9, **dadurch gekennzeichnet, dass** er zwei Doppellaufrollenelemente (2.1, 2.2, 2.3) und ein Vorspannelement (20.7) (20.9) jeweils im Abstand von 120°C (± 10°) zueinander aufweist.

11. Schwingungstilger nach einem der Ansprüche 1 - 10, **dadurch gekennzeichnet, dass** die Befestigungsvorrichtung (13) entlang ihres Umfanges herausnehmbare Federelemente oder elastische Scheiben (13.7) aufweist.

12. Schwingungstilger nach einem der Ansprüche 1 - 11, **dadurch gekennzeichnet, dass** die Rollenvorrichtung (2) (20.4) mittels eines Axialantriebes (12) axial verschoben werden kann, der am oberen oder am unteren Ende des Funktionsfederelementes (1) (20.8) montiert ist, und die Rollenvorrichtung über Führungsvorrichtungen (12.4) bewegt.

13. Tilgersystem umfassend einen gedämpften Schwingungstilger und einen adaptiven ungedämpften Schwingungstilger gemäß einem der Ansprüche 1 - 12.

14. Verwendung eines Schwingungstilgers nach einem der Ansprüche 1 - 13 zur Reduzierung oder Beseitigung von Störfrequenzen in einer Maschine oder Anlage oder Teilen einer Maschine oder Anlage, oder beim Betrieb einer Windkraftanlage zur Beruhigung von Störschwingungen im Bereich der Rotornabe, der Rotorblätter, des Getriebes, des Generators oder des Antriebsstranges.

15. Windkraftanlage umfassend einen Schwingungstilger nach einem der Ansprüche 1-12 oder ein Tilgersystem nach Anspruch 13.

## Claims

1. Adaptive vibration damper matched to disturbance frequencies, essentially comprising a vibration mass (8) (20.1), a support structure (6), to which the vibration mass (8) (20.1) is attached, and a vibration-capable, essentially rod-shaped functional spring element (1) (20.8), which has at one end an attachment device (13)(20.2), by means of which it is securely connected to a machine unit (9) which is subjected to the said disturbance frequencies to be damped, where the support structure (6) has at least one displacement device (3) running parallel to the longitudinal axis of the rod-shaped functional spring element (1) (20.8) and aligned therewith, and an interspace is located between the functional spring element (1) (20.8) and the displacement device (3), in which at least one roller device (2) (20.4) is provided which can be moved to and fro in the axial direction along the displacement device and secured and represents the connecting element between the functional spring element (1) (20.8) and the displacement device (3), where the vibrationally effective length of the said spring element and thus the frequency of the vibration system can be changed and adapted variably with a locally unchanged vibration mass (8) (20.1) by attachment of the at least one roller device (2) (20.4) at a certain selected position on the rod-shaped functional spring element (1) (20.8); **characterised in that,** in addition to said at least one roller device (2) (20.4), at least one pretensioning element (20.7) (20.9) is provided which can be moved to and fro in the axial direction along the displacement device (3) together with the roller device like the latter and secured.

2. Vibration damper according to Claim 1, **characterised in that** the damper has two roller devices (2) (20.4) and at least one pretensioning element (20.7) (20.9), where the said elements are arranged uniformly around the functional spring element (1) (20.8).

3. Vibration damper according to Claim 2, **characterised in that** the pretensioning element has at least one compression spring (20.7).

4. Vibration damper according to one of Claims 1 - 3, **characterised in that** it has guiding spring elements (20.3) which are arranged in the immediate area of the roller device (2) (20.4) or in the region of the support structure (6) or the vibration mass (8) (20.1), and prevent the vibration mass (8) (20.1) from rotating when force is exerted on the functional spring element (1) (20.8), without significantly influencing the spring stiffness of the system as a whole.

5. Vibration damper according to one of Claims 1 - 4, **characterised in that** the functional spring element (1) (20.8) is a bending rod having three planar longitudinal running surfaces (1.1) which are arranged at an angle of 120° (± 10°) to one another.

6. Vibration damper according to Claim 5, **characterised in that** the displacement device (3) is a rail device which has planar running surfaces (3.1) which are opposite the three running surfaces (1.1) of the bending rod (1), where the said running surfaces are provided for guiding the said roller device(s).

7. Vibration damper according to Claim 6, **characterised in that** the roller device (2) (20.4) has two or three double running roller elements (2.1, 2.2, 2.3), which are in each case provided for connection of the opposite surfaces of the bending rod and the rail device, where each element comprises an outer running roller pair (2.1, 2.2) and a central running roller (2.3), and the central running roller (2.3) has a different running direction than the two rollers of the outer running roller pair (2.1, 2.2), and the central running roller and the outer running roller pair roll on different running surfaces (1.1) or (3.1), and are not functionally connected to the respective other running surface.

8. Vibration damper according to Claim 7, **characterised in that** the surfaces (1.1, 3.1) have free air gap (2.3.3) in the regions on the bending rod and rail device whose running surface is not used for rolling by the respective rollers (2.1, 2.2, 2.3).

9. Vibration damper according to Claim 7 or 8, **characterised in that** the two or three double running roller elements (2.1, 2.2, 2.3) are brought together via a holder or guides (2.7, 2.4).

10. Vibration damper according to one of Claims 7 - 9, **characterised in that** it has two double running roller elements (2.1, 2.2, 2.3) and one pretensioning element (20.7) (20.9), each at a separation of 120° (± 10°) from one another.

11. Vibration damper according to one of Claims 1 - 10, **characterised in that** the attachment device (13) has removable spring elements or elastic discs (13.7) along its periphery.

12. Vibration damper according to one of Claims 1 - 11, **characterised in that** the roller device (2) (20.4) can be moved axially by means of an axial drive (12) which is mounted on the upper or lower end of the functional spring element (1) (20.8) and moves the roller device via guide devices (12.4).

13. Damper system comprising a damped vibration damper and an adaptive undamped vibration damper according to one of Claims 1 - 12.

14. Use of a vibration damper according to one of Claims 1 - 13 for reducing or eliminating disturbance frequencies in a machine or installation or parts of a machine or installation, or during operation of a wind turbine for calming disturbing vibrations in the region of the rotor hub, the rotor blades, the gearbox, the generator or the drive train.

15. Wind turbine comprising a vibration damper according to one of Claims 1 - 12 or a damper system according to Claim 13.

## Revendications

1. Amortisseur de vibrations adaptatif adapté pour des fréquences de perturbation, comprenant de façon essentielle une masse de vibration (8) (20.1), une structure de support (6) à laquelle la masse de vibration (8) (20.1) est fixée, et un élément de ressort fonctionnel essentiellement en forme de tige disposant de la capacité de vibrer (1) (20.8), lequel comporte, au niveau d'une extrémité, un dispositif de fixation (13)(20.2) au moyen duquel il est connecté de façon sécurisée à une unité de machine (9) qui est soumise auxdites fréquences de perturbation qui doivent être amorties, dans lequel la structure de support (6) comporte au moins un dispositif de déplacement (3) qui court parallèlement à l'axe longitudinal de l'élément de ressort fonctionnel en forme de tige (1) (20.8) et qui est aligné avec, et un inter-espace est localisé entre l'élément de ressort fonctionnel (1) (20.8) et le dispositif de déplacement (3), dans lequel au moins un dispositif à rouleau(x) (2) (20.4) est prévu, lequel peut être déplacé en va-et-vient dans la direction axiale le long du dispositif de déplacement et est fixé de façon sécurisée et représente l'élément de connexion entre l'élément de ressort fonctionnel (1) (20.8) et le dispositif de déplacement (3), dans lequel la longueur efficace en termes de vibration dudit élément de ressort et par conséquent, la fréquence du système de vibration peuvent être modifiées et adaptées de façon variable à l'aide d'une masse de vibration localement non modifiée (8) (20.1) au moyen de la fixation de l'au moins un dispositif à rouleau(x) (2) (20.4) au niveau d'une certaine position sélectionnée sur l'élément de ressort fonctionnel en forme de tige (1) (20.8) ; **caractérisé en ce que**, en plus dudit au moins un dispositif à rouleau(x) (2) (20.4), au moins un élément de mise sous pré-tension (20.7) (20.9) est prévu, lequel peut être déplacé en va-et-vient dans la direction axiale le long du dispositif de déplacement (3) en association avec le dispositif à rouleau(x) de façon similaire à ce dernier et peut être fixé de façon sécurisée.

2. Amortisseur de vibrations selon la revendication 1, **caractérisé en ce que** l'amortisseur comporte deux dispositifs à rouleau(x) (2) (20.4) et au moins un élément de mise sous pré-tension (20.7) (20.9), dans lequel lesdits éléments sont agencés de façon uniforme autour de l'élément de ressort fonctionnel (1) (20.8).

3. Amortisseur de vibrations selon la revendication 2, **caractérisé en ce que** l'élément de mise sous pré-tension comporte au moins un ressort de compression (20.7).

4. Amortisseur de vibrations selon l'une quelconque des revendications 1 - 3, **caractérisé en ce qu'**il comporte des éléments de ressort de guidage (20.3) qui sont agencés dans la zone immédiate du dispositif à rouleau(x) (2) (20.4) ou dans la région de la structure de support (6) ou de la masse de vibration (8) (20.1), et qui empêchent que la masse de vibration (8) (20.1) ne soit entraînée en rotation lorsqu'une force est exercée sur l'élément de ressort fonctionnel (1) (20.8), sans influencer de manière significative la rigidité élastique du système pris dans sa globalité.

5. Amortisseur de vibrations selon l'une quelconque des revendications 1 - 4, **caractérisé en ce que** l'élément de ressort fonctionnel (1) (20.8) est une tige de flexion qui comporte trois surfaces de glissement longitudinales planes (1.1) qui sont agencées selon un angle de 120° (± 10°) les unes par rapport aux autres.

6. Amortisseur de vibrations selon la revendication 5, **caractérisé en ce que** le dispositif de déplacement (3) est un dispositif à rail qui comporte des surfaces de glissement planes (3.1) qui sont opposées aux trois surfaces de glissement (1.1) de la tige de flexion (1), dans lequel lesdites surfaces de glissement sont prévues pour guider ledit/lesdits dispositif(s) à rouleau(x).

7. Amortisseur de vibrations selon la revendication 6, **caractérisé en ce que** le dispositif à rouleau(x) (2) (20.4) comporte deux ou trois éléments de rouleau de glissement doubles (2.1, 2.2, 2.3), lesquels sont dans chaque cas prévus pour une connexion des surfaces opposées de la tige de flexion et du dispositif à rail, dans lequel chaque élément comprend une paire de rouleaux de glissement externes (2.1, 2.2) et un rouleau de glissement central (2.3), et le rouleau de glissement central (2.3) présente une direction de glissement différente de celles des deux rouleaux de la paire de rouleaux de glissement externes (2.1, 2.2), et le rouleau de glissement central et la paire de rouleaux de glissement externes roulent sur des surfaces de glissement différentes (1.1) ou (3.1), et ils ne sont pas connectés fonctionnellement à l'autre surface de glissement respective.

8. Amortisseur de vibrations selon la revendication 7, **caractérisé en ce que** les surfaces (1.1, 3.1) comportent un espace d'air libre (2.3.3) dans les régions sur la tige de flexion et sur le dispositif à rail dont une surface de glissement n'est pas utilisée pour le roulement par les rouleaux respectifs (2.1, 2.2, 2.3).

9. Amortisseur de vibrations selon la revendication 7 ou 8, **caractérisé en ce que** les deux ou trois éléments de rouleau de glissement doubles (2.1, 2.2, 2.3) sont rapprochés via un support ou des guides (2.7, 2.4).

10. Amortisseur de vibrations selon l'une des revendications 7 - 9, **caractérisé en ce qu'**il comporte deux éléments de rouleau de glissement doubles (2.1, 2.2, 2.3) et un élément de mise sous pré-tension (20.7) (20.9), chacun selon une séparation de 120° (± 10°) par rapport aux autres.

11. Amortisseur de vibrations selon l'une des revendications 1 - 10, **caractérisé en ce que** le dispositif de fixation (13) comporte des éléments de ressort ou des disques élastiques amovibles (13.7) le long de sa périphérie.

12. Amortisseur de vibrations selon l'une des revendications 1 - 11, **caractérisé en ce que** le dispositif à rouleau(x) (2) (20.4) peut être déplacé axialement au moyen d'un moyen d'entraînement axial (12) qui est monté sur l'extrémité supérieure ou inférieure de l'élément de ressort fonctionnel (1) (20.8) et qui déplace le dispositif à rouleau(x) via des dispositifs de guidage (12.4).

13. Système d'amortisseur comprenant un amortisseur de vibrations avec amortissement et un amortisseur de vibrations sans amortissement adaptatif selon l'une des revendications 1 - 12.

14. Utilisation d'un amortisseur de vibrations selon l'une des revendications 1 - 13 pour réduire ou éliminer des fréquences de perturbation dans une machine ou une installation ou dans des parties d'une machine ou d'une installation, ou pendant le fonctionnement d'une éolienne pour calmer des vibrations perturbantes dans la région du moyeu de rotor, des pales de rotor, de la boîte de vitesses, du générateur ou de la chaîne cinématique.

15. Éolienne comprenant un amortisseur de vibrations selon l'une des revendications 1 - 12 ou un système d'amortisseur selon la revendication 1.
